(19) **Europäisches Patentamt**
**European Patent Office**
**Office européen des brevets**

(11) **EP 1 394 106 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(51) Int Cl.:
**C01B 6/24** (2006.01)

(21) Anmeldenummer: **03017725.7**

(22) Anmeldetag: **04.08.2003**

(54) **Verfahren zur Herstellung von Lithiumaluminiumhydridlösungen**

Process for preparing lithium aluminum hydride solutions

Procédé pour la préparation de solutions d'hydrure double de lithium e d'aluminium

(84) Benannte Vertragsstaaten:
**DE FR GB**

(30) Priorität: **16.08.2002 DE 10237441**

(43) Veröffentlichungstag der Anmeldung:
**03.03.2004 Patentblatt 2004/10**

(73) Patentinhaber: **Chemetall GmbH**
**60487 Frankfurt am Main (DE)**

(72) Erfinder:
• **Dawidowski, Dirk**
**60439 Frankfurt (DE)**
• **Debbeler, Bernhard**
**38704 Liebenburg (DE)**

• **Emmel, Ute**
**65929 Frankfurt am Main (DE)**
• **Pleyer, Walter**
**38685 Langelsheim (DE)**
• **Weiss, Wilfried**
**37632 Eschershausen (DE)**

(74) Vertreter: **Uppena, Franz et al**
**Chemetall GmbH**
**Patente, Marken & Lizenzen**
**Trakehner Strasse 3**
**60487 Frankfurt/Main (DE)**

(56) Entgegenhaltungen:
**DE-C- 944 188       US-A- 2 680 059**
**US-A- 3 180 700**

**Beschreibung**

Die Erfindung betrifft ein Verfahren zur Herstellung von Lithiumaluminiumhydridlösungen.

Lithiumaluminiumhydrid ($LiAlH_4$) wird industriell hergestellt durch Reaktion von Lithiumhydrid (LiH) mit einem Aluminiumhalogenid ($AlX_3$) nach der Methode von Schlesinger (Finholt, A.F., Bond, A.C. and Schlesinger H.I.J., JACS, 69, 1199 (1947)):

$$4\ LiH\ +\ AlX_3\ \rightarrow\ LiAlH_4\ +\ 3\ LiX$$

Dabei ist X = F, Cl, Br oder 1, wobei Cl am gebräuchlichsten ist. Als Lösungsmittel werden Ether verwendet. Kommerziell angebotene $LiAlH_4$-Lösungen enthalten aufgrund der damit verbundenen Explosionsgefahr in der Regel keinen Diethylether sondern werden als 10 %-ige Lösung in THF oder 15 %-ige Lösung in THF/Toluol bereitgestellt.

Um zu einer Lösung von $LiAlH_4$ in THF zu gelangen, kann die Synthese in THF durchgeführt werden. Dies hat allerdings den Nachteil, dass zum einen die eingesetzten Aluminiumhalogenide (bevorzugt $AlCl_3$) nur schlecht in THF löslich sind und zum anderen die entstehenden Lithiumhalogenide (bevorzugt LiCl) relativ gut in THF löslich sind. So weist dieses Verfahren eine relativ niedrige Synthesekonzentration auf und führt zu Lösungen mit einem relativ hohen Gehalt an Halogenidverunreinigungen.

Aus diesem Grunde werden Lösungen von $LiAlH_4$ in THF so hergestellt, dass zuerst die Synthese von $LiAlH_4$ in Diethylether durchgeführt wird. Dies hat den Vorteil, dass die Löslichkeit der Aluminiumhalogenide (bevorzugt $AlCl_3$) in Diethylether relativ hoch ist und andererseits die Löslichkeit der entstehenden Lithiumhalogenide (bevorzugt LiCl) in Diethylether relativ schlecht ist. Die erhaltene $LiAlH_4$-Lösung in Diethylether wird anschließend zur Trockene einge-dampft, und das feste $LiAlH_4$-Pulver wird im gewünschten Lösungsmittel (z.B. THF oder THF/Toluol) aufgelöst. Von Nachteil dieses Verfahrens ist, dass die thermische Belastung des $LiAlH_4$ beim Eindampfen zu einer teilweisen Zerset-zung führt:

$$3\ LiAlH_4\ \rightarrow\ Li_3AlH_6\ +\ 2\ AlH_3\quad (2\ AlH_3\ \rightarrow\ 2\ Al\ +\ 3/2\ H_2\ )$$

Ein weiterer Nachteil dieses Verfahrens ist darin zu sehen, dass zunächst aus einer Lösung unter hohem Energieaufwand ein Feststoff hergestellt wird, der anschließend wieder gelöst wird.

Aufgabe der Erfindung ist es, ein Verfahren zur Herstellung von Diethylether freien $LiAlH_4$-Lösungen bereit-zustellen, das die Nachteile des Standes der Technik beseitigt und insbesondere die Isolierung und Wiederauflösung von $LiAlH_4$ vermeidet.

Gelöst wird die Aufgabe durch ein Verfahren zur Herstellung von $LiAlH_4$lösungen, bei dem Lithiumhydrid mit einem Aluminiumhalogenid in Diethylether zu Lithiumaluminiumhydrid reagiert, das entstandene Lithiumhalogenid abgetrennt wird, und wobei anschließend ein Lösungsmittel, dessen Komplexierungsenergie mit $LiAlH_4$ größer ist als die Komplexierungsenergie von Diethylether mit $LiAlH_4$, zugesetzt wird, und der Diethylether destillativ entfernt wird.

Als bevorzugte Lösungsmittel können Ether, wie z.B. Tetrahydrofuran (THF), 2-Methyltetrahydrofuran und Ether aus der Gruppe der Ethylglycolether (wie z.B. Monoglycol-dimethylether, Monoglycol-diethylether, Diglycol-dimethylether, Diglycol-diethylether oder Diglycol-dibutylether) eingesetzt werden. Besonders bevorzugt sind THF und 2-Methyl-THF. Auch Amine, deren Komplexierungsenergie mit $LiAlH_4$ höher ist als die Komplexierungsenergie von Diethy-lether mit $LiAlH_4$, können eingesetzt werden. Gegebenenfalls müssen die Komplexierungsenergien von vorgesehenen Lösungsmitteln in Vorversuchen bestimmt werden.

Bevorzugt wird das Verfahren so durchgeführt, dass nach erfolgter Reaktion von LiH mit $AlX_3$ (bevorzugt ist X = Cl) in Diethylether die Syntheselösung bei bevorzugt 50 bis 70 °C, besonders bevorzugt 55 bis 65 °C, so viel Diethylether abdestilliert wird, dass bevorzugt eine ca. 20 %-ige Lösung von $LiAlH_4$ in Diethylether entsteht. Die Destillation des Diethylethers wird anfangs bei der Siedetemperatur des Diethylethers durchgeführt. Im weiteren Verlauf der Destillation liegen die bevorzugten Temperaturen bei 40 bis 80 °C, besonders bevorzugt bei 55 bis 65 °C. Bevorzugt wird bei der Destillation Vakuum angelegt. Die erhaltene bevorzugte 20 %-ige Lösung entspricht einem Komplex von einem Mol $LiAlH_4$ mit 2 Mol Diethylether. Anschließend wird das Lösungsmittel zugefügt. Bevorzugt wird mindestens eine der verbliebenen Diethylethermenge äquivalente Menge (auf Mol-Basis), besonders bevorzugt 2 bis 5 Mol-Äquivalente Lösungsmittel zugefügt. Der frei werdende Diethylether wird abdestilliert. Die Destillation wird bevorzugt unter Anlegen von Vakuum bei bevorzugten Temperaturen von 40 bis 80 °C, besonders bevorzugt 55 bis 65 °C, durchgeführt. Auf diese Weise erfährt das $LiAlH_4$ nur eine vergleichsweise geringe thermische Belastung. Zur vollständigen Entfernung des Diethylethers kann solange Lösungsmittel nachgesetzt und abdestilliert werden, bis in der $LiAlH_4$-Lösung kein

Diethylether mehr nachweisbar ist. Auch kann von vornherein eine größere Menge Lösungsmittel zugesetzt werden. Das erhaltene Destillat (Diethylether und Lösungsmittel) kann nach Rektifikation wieder eingesetzt werden.

Die erhaltene 20 %-ige Lösung ist farblos und nahezu klar, Zersetzungsprodukte des $LiAlH_4$ lassen sich nicht oder kaum nachweisen. Bei Verwendung von THF als Lösungsmittel ist die 20 %-ige Lösung zwar viskos, in der Kälte (bis -20 °C) kristallisiert aber kein $LiAlH_4$ aus, so dass eine solche Lösung kommerziell vertrieben werden kann. Auch kann eine 20 %-ige $LiAlH_4$-Lösung mit einem Kohlenwasserstoff, wie z.B. Toluol (oder Xylol, Mesitylen, Cyclopentan, Cyclohexan, Methylcyclohexan, Pentan, Hexan, Heptan, Octan) verdünnt werden. Der Kohlenwasserstoff kann auch bereits zur Reaktionslösung aus $LiAlH_4$ in Diethylether zugegeben werden. Bei der anschließenden Zugabe des Lösungsmittels (welches die höhere Komplexierungsenergie mit $LiAlH_4$ aufweist) und der Abdestillation des Diethylethers stört der Kohlenwasserstoff nicht.

Der Vorteil des erfindungsgemäßen Verfahrens liegt darin, dass sich $LiAlH_4$-Lösungen (mit einem anderen Lösungsmittel als Diethylether) direkt aus der Syntheselösung durch Lösungsmitteltausch herstellen lassen. Die energetisch ungünstige Isolierung des $LiAlH_4$ durch thermische Trocknung und die damit verbundenen Verluste durch thermische Zersetzung werden in vorteilhafter Weise vermieden.

Die Erfindung wird im folgenden anhand von Beispielen näher erläutert.

**Beispiel 1: Komplexierung von $LiAlH_4$ mit THF, Bestimmung der Komplexierungsenergien**

In einem 0,8 -Liter-Reaktor wurden unter Stickstoffatmosphäre 4,0 g $LiAlH_4$-Pulver (103 mmol) in 222,5 g Toluol bei 20 °C vorgelegt. Zur Bestimmung der Wärmekapazität dieses Gemisches wurde mit einem Kalorimeter Typ RC1 der Firma Mettler-Toledo eine Temperaturrampe von 20 °C auf 25 °C gefahren und mittels elektrischer Kalibrierheizung kalibriert (Cp = 1,94 kJ/(kg*K)). Dann wurden bei $T_{(i)}$ = 25 °C innerhalb von 30 Minuten 15,3 g Diethylether (206 mmol) zudosiert und 30 Minuten nachreagiert. Anschließend wurden zu dieser Lösung innerhalb von 30 Minuten 14,9 g Tetrahydrofuran (206 mmol) zugefügt und 30 Minuten nachreagiert. Zur Bestimmung der Wärmekapazität des Gesamtgemisches aus $LiAlH_4$, Toluol, Diethylether und THF wurde eine Temperaturrampe von 25 °C auf 20 °C gefahren und mittels elektrischer Kalibrierheizung kalibriert (Cp = 1,97 kJ/(kg*K)). Die rechnerisch ermittelten Komplexierungsenergien ergaben für den

1. Schritt (Diethyletherkomplexierung)     dH = - 34,1 kJ/mol $LiAlH_4$
2. Schritt (Tetrahydrofurankomplexierung)     dH = - 35,0 kJ/mol $LiAlH_4$.

Das bereits durch Diethylether komplexierte $LiAlH_4$ gab bei der Umsetzung mit THF weitere Energie (35,0 kJ/mol $LiAlH_4$) ab.

**Beispiel 2: Destillative Entfernung des Diethylethers aus einer Lösung von $LiAlH_4$ in Diethylether und THF**

250 g der unter 1 bereiteten toluolhaltigen Lösung von $LiAlH_4$ mit Diethylether und Tetrahydrofuran im molaren Verhältnis von 1 : 2 : 2 ($LiAlH_4$ : Diethylether : THF) wurden im Ölbad (80 °C) zunächst bei Normaldruck (Stickstoffatmosphäre) und anschließend im Vakuum (bis 150 mbar) destilliert. Es verblieben 169 g klare Lösung, die ein molares Verhältnis von Diethylether : THF von 0,1 : 1 zeigte. Es wurden nochmals 1,7 g THF (2,3 mmol) zugesetzt und erneut unter gleichen Bedingungen destilliert. In der erhaltenen Lösung ließ sich H-NMR spektroskopisch kein Diethylether mehr nachweisen.

**Beispiel 3: Umsolvatisieren einer $LiAlH_4$ / Diethylether - Lösung mit THF**

149 g einer 21 %-igen Lösung von $LiAlH_4$ in Diethylether (825 mmol $LiAlH_4$ + 1650 mmol Diethylether) wurden im 500-ml-Doppelmantelreaktor bei Raumtemperatur mit 178 g THF (2475 mmol) versetzt, entsprechend einem Verhältnis von $LiALH_4$ : Diethylether: THF = 1 : 2 : 3 ). Die Lösung wurde unter Stickstoffatmosphäre bis zum Sieden erwärmt (Innentemperatur von 60 °C). Als bei dieser Temperatur kein Destillat mehr überging, wurde Vakuum angelegt und der Druck allmählich auf 50 mbar abgesenkt. Die Destillation wurde beendet, als kein Destillat mehr überging.

Nach Brechen des Vakuums mittels Stickstoff wurden 143 g einer klaren Lösung mit einem $LiAlH_4$-Gehalt von 20,9 Gew.-% erhalten. Im H-NMR Spektrum war kein Diethylether mehr nachweisbar, das Molverhältnis von $LiAlH_4$ : Tetrahydrofuran betrug 1 : 2.

**Beispiel 4: Herstellung einer 15 %-igen $LiAlH_4$-Lösung in THF/Toluol**

123,1 g der Lösung von $LiAlH_4$ in THF aus Beispiel 3 mit einem $LiAlH_4$-Gehalt von 677 mmol wurden mit 48,2 g Toluol versetzt. Die Lösung blieb klar und farblos. Der LiAlH$_4$ -Gehalt lag bei 15 Gew.-%, das Molverhältnis von LiAlH$_4$: Tetrahydrofuran betrug 1: 2.

**Patentansprüche**

1. Verfahren zur Herstellung von LiAlH$_4$-lösungen, bei dem Lithiumhydrid mit einem Aluminiumhalogenid in Diethylether zu Lithiumaluminiumhydrid reagiert und das entstandene Lithiumhalogenid abgetrennt wird, **dadurch gekennzeichnet, dass** anschließend ein Lösungsmittel, dessen Komplexierungsenergie mit LiAlH$_4$ größer ist als die Komplexierungsenergie von Diethylether mit LiAlH$_4$, zugesetzt wird, und der Diethylether destillativ entfernt wird.

2. Verfahren nach Anspruch 1, **dadurch gekennzeichnet, dass** als Lösungsmittel ein oder mehrere Ether eingesetzt werden.

3. Verfahren nach Anspruch 1 oder 2, **dadurch gekennzeichnet, dass** als Lösungsmittel Tetrahydrofuran (THF), 2-Methyltetrahydrofuran oder ein Ether aus der Gruppe der Ethylglycolether (wie Monoglycol-dimethylether, Monoglycol-diethylether, Diglycol-dimethylether, Diglycol-diethylether oder Diglycol-dibutylether) eingesetzt wird.

4. Verfahren nach einem der Ansprüche 1 bis 3, **dadurch gekennzeichnet, dass** als Aluminiumhalogenid AlCl$_3$ eingesetzt wird.

5. Verfahren nach einem der Ansprüche 1 bis 4, **dadurch gekennzeichnet, dass** die Syntheselösung von LiAlH$_4$ in Diethylether durch Abdestillation des Diethylethers eingeengt wird.

6. Verfahren nach einem der Ansprüche 1 bis 5, **dadurch gekennzeichnet, dass** eine der verbleibenden Diethylethermenge mindestens äquivalente (auf Mol-Basis) Menge Lösungsmittel zugefügt wird.

7. Verfahren nach einem der Ansprüche 1 bis 6, **dadurch gekennzeichnet, dass** die Abdestillation des Diethylethers unter Vakuum bei Temperaturen von 40 bis 80 °C erfolgt.

8. Verfahren nach Anspruch 7, **dadurch gekennzeichnet, dass** die Destillation bei Temperaturen von 55 bis 65 °C erfolgt.

9. Verfahren nach einem der Ansprüche 1 bis 8, **dadurch gekennzeichnet, dass** die LiAlH$_4$-Lösung mit einem Kohlenwasserstoff verdünnt wird.

**Claims**

1. Process for the preparation of LiAlH$_4$ solutions, in which lithium hydride reacts with an aluminium halide in diethyl ether to give lithium aluminium hydride, and the lithium halide which arises is separated off, **characterised in that** a solvent the complexing energy of which with LiAlH$_4$ is greater than the complexing energy of diethyl ether with LiAlH$_4$ is then added, and the diethyl ether is removed by distillation.

2. Process according to Claim 1, **characterised in that** one or more ethers are utilised as the solvent.

3. Process according to Claim 1 or 2, **characterised in that** tetrahydrofuran (THF), 2-methyltetrahydrofuran or an ether from the group comprising ethyl glycol ethers (such as monoglycol dimethyl ether, monoglycol diethyl ether, diglycol dimethyl ether, diglycol diethyl ether or diglycol dibutyl ether) is utilised as the solvent.

4. Process according to one of Claims 1 to 3, **characterised in that** AlCl$_3$ is utilised as the aluminium halide.

5. Process according to one of Claims 1 to 4, **characterised in that** the synthesis solution of LiAlH$_4$ in diethyl ether is concentrated by distilling off the diethyl ether.

6. Process according to one of Claims 1 to 5, **characterised in that** a quantity of solvent at least equivalent (on a molar basis) to the residual diethyl ether quantity is added.

**7.** Process according to one of Claims 1 to 6, **characterised in that** the diethyl ether is distilled off under vacuum at temperatures of from 40 to 80°C.

**8.** Process according to Claim 7, **characterised in that** the distillation takes place at temperatures of from 55 to 65°C.

**9.** Process according to one of Claims 1 to 8, **characterised in that** the LiAlH$_4$ solution is diluted with a hydrocarbon.


**Revendications**

**1.** Procédé de préparation de solutions d'hydrure de lithium et d'aluminium LiAlH$_4$, dans lequel on fait réagir de l'hydrure de lithium et un halogénure d'aluminium, dans de l'éther diéthylique, pour les convertir en hydrure de lithium et d'aluminium, et l'on sépare l'halogénure de lithium formé, et lequel procédé est **caractérisé en ce que** l'on ajoute ensuite un solvant dont l'énergie de complexation avec LiAlH$_4$ est plus grande que l'énergie de complexation de l'éther diéthylique avec LiAlH$_4$, et l'on chasse l'éther diéthylique par distillation.

**2.** Procédé conforme à la revendication 1, **caractérisé en ce que** l'on utilise comme solvant un ou plusieurs éther(s).

**3.** Procédé conforme à la revendication 1 ou 2, **caractérisé en ce que** l'on utilise comme solvant du tétrahydrofurane (THF), du 2-méthyl-tétrahydrofurane, ou un éther choisi dans l'ensemble des éthers de glycol, tel l'éther diméthylique de monoéthylèneglycol, l'éther diéthylique de monoéthylèneglycol, l'éther diméthylique de diéthylèneglycol, l'éther diéthylique de diéthylèneglycol, ou l'éther dibutylique de diéthylèneglycol.

**4.** Procédé conforme à l'une des revendications 1 à 3, **caractérisé en ce que** l'on utilise comme halogénure d'aluminium du chlorure d'aluminium AlCl$_3$.

**5.** Procédé conforme à l'une des revendications 1 à 4, **caractérisé en ce que** l'on concentre la solution de LiAlH$_4$ dans de l'éther diéthylique, issue de la synthèse, par distillation d'éther diéthylique.

**6.** Procédé conforme à l'une des revendications 1 à 5, **caractérisé en ce que** l'on ajoute du solvant en une quantité au moins équivalente, en nombre de moles, à la quantité restante d'éther diéthylique.

**7.** Procédé conforme à l'une des revendications 1 à 6, **caractérisé en ce que** l'on opère la distillation d'éther diéthylique sous vide et à une température de 40 à 80 °C.

**8.** Procédé conforme à la revendication 7, **caractérisé en ce que** l'on opère la distillation à une température de 55 à 65 °C.

**9.** Procédé conforme à l'une des revendications 1 à 8, **caractérisé en ce que** l'on dilue la solution d'hydrure de lithium et d'aluminium avec un hydrocarbure.

## IN DER BESCHREIBUNG AUFGEFÜHRTE DOKUMENTE

**In der Beschreibung aufgeführte Nicht-Patentliteratur**

- **Finholt, A.F. ; Bond, A.C. ; Schlesinger H.I.J.** *JACS,* 1947, vol. 69, 1199